# EUROPEAN PATENT APPLICATION

(11) **EP 3 954 651 A1**
(43) Date of publication of application: **16.02.2022**
(21) Application number: 20788590.6
(22) Date of filing: 17.03.2020
(51) Int. Cl.: C01B 21/086, C01D 15/00

(54) **ALKALI METAL BIS(FLUOROSULFONYL)IMIDE AQUEOUS SOLUTION, CONTAINER HAVING SAID AQUEOUS SOLUTION THEREIN, AND METHOD FOR STORING OR TRANSPORTING SAID AQUEOUS SOLUTION**

(30) Priority: 08.04.2019 JP 2019073655; 03.03.2020 JP 2020036114
(71) Applicant: Nippon Shokubai Co., Ltd., Osaka-shi, Osaka 541-0043 (JP)
(72) Inventor: SHINGUBARA Koji, Suita-shi, Osaka 564-0034 (JP); OKUMURA Yasunori, Suita-shi, Osaka 564-0034 (JP); OKAJIMA Masayuki, Suita-shi, Osaka 564-0034 (JP); ITAYAMA Naohiko, Suita-shi, Osaka 564-0034 (JP); OYAMA Yusuke, Suita-shi, Osaka 564-0034 (JP)
(74) Representative: Hoffmann Eitle
(86) International application number: PCT/JP2020/011833
(87) International publication number: WO 2020/209018

(57) **Abstract**

An aqueous solution containing an alkali metal bis(fluorosulfonyl)imide, in which a total content of the alkali metal bis(fluorosulfonyl)imide and water is 98 mass% or more with respect to a total amount of the aqueous solution, and a pH is -3 to 10.

## Description

### Technical Field

The present disclosure relates to an alkali metal bis(fluorosulfonyl)imide aqueous solution, an aqueous solution-containing container, and a method for storing or transporting this aqueous solution.

### Background Art

An alkali metal bis(fluorosulfonyl)imide such as lithium bis(fluorosulfonyl)imide is useful as an intermediate for a compound having an N(SO₂F)₂ group. Furthermore, the alkali metal bis(fluorosulfonyl)imide is a compound useful in various use applications, for example, is used as an electrolyte, an additive to an electrolytic solution of a battery or a capacitor, a selective electrophilic fluorinating agent, a photo acid generator, a thermal acid generator, a near infrared light-absorbing dye, or the like (Patent Literature 1).

### Citation List

### Patent Literature

Patent Literature 1: International Publication WO 2011/149095

### Summary of Invention

### Technical Problem

In this regard, an aqueous solution is mentioned as an embodiment of an alkali metal bis(fluorosulfonyl)imide product. This product is stored and transported in an aqueous solution state. However, according to intensive studies of the present inventors, it has been found that the alkali metal bis(fluorosulfonyl)imide is likely to be subjected to hydrolysis, and thus the stability of the alkali metal bis(fluorosulfonyl)imide in the aqueous solution is required to be further enhanced.

The present disclosure has been conceived in view of the above-described circumstances and an object thereof is to provide an alkali metal bis(fluorosulfonyl)imide aqueous solution having higher storage stability, an aqueous solution-containing container containing this aqueous solution, and a method for storing or transporting this aqueous solution.

### Solution to Problem

An aqueous solution of the present disclosure is an aqueous solution containing an alkali metal bis(fluorosulfonyl)imide, in which a total content of the alkali metal bis(fluorosulfonyl)imide and water is 98 mass% or more with respect to a total amount of the aqueous solution, and a pH is -3 to 10.

The aqueous solution of the present disclosure preferably contains 10000 ppm by mass or less of fluoride ions with respect to the total amount of the aqueous solution.

The aqueous solution of the present disclosure preferably contains 10000 ppm by mass or less of sulfate ions with respect to the total amount of the aqueous solution.

The aqueous solution of the present disclosure preferably contains 1 to 10000 ppm by mass of amidosulfate ions with respect to the total amount of the aqueous solution.

The aqueous solution of the present disclosure preferably contains 1 to 90 mass% of the alkali metal bis(fluorosulfonyl)imide with respect to the total amount of the aqueous solution.

An aqueous solution-containing container of the present disclosure includes a container and an aqueous solution contained in the container, and the aqueous solution is the above-described aqueous solution.

The above-described container preferably contains at least one material selected from the group consisting of a resin, glass, and a metal.

A method for storing or transporting an aqueous solution containing an alkali metal bis(fluorosulfonyl)imide of the present disclosure includes storing or transporting the above-described aqueous solution.

### Advantageous Effects of Invention

According to the present disclosure, it is possible to provide an alkali metal bis(fluorosulfonyl)imide aqueous solution having higher storage stability, an aqueous solution-containing container containing this aqueous solution, and a method for storing or transporting this aqueous solution.

### Description of Embodiments

An alkali metal bis(fluorosulfonyl)imide aqueous solution of the present disclosure has a total content of an alkali metal bis(fluorosulfonyl)imide and water of 98 mass% or more with respect to a total amount of this aqueous solution and a pH of 10 or less. The aqueous solution of the present disclosure is suitable for storing or transporting the alkali metal bis(fluorosulfonyl)imide in an aqueous solution state because of its excellent storage stability. Hereinafter, the alkali metal bis(fluorosulfonyl)imide aqueous solution is also simply referred to as the MFSI aqueous solution.

The alkali metal bis(fluorosulfonyl)imide is an alkali metal salt of bis(fluorosulfonyl)imide and is a compound represented by general formula: MN(SO₂F)₂ (M is an alkali metal). Specific examples of M include Li, Na, K, Rb, and Cs, Li, Na, or K is preferred, and Li is more preferred. Note that, in the following description, the alkali metal bis(fluorosulfonyl)imide is also simply referred to as the MFSI, and in the case of mentioning an alkali metal bis(fluorosulfonyl)imide containing a specific alkali metal, M is replaced with this alkali metal.

When the MFSI is hydrolyzed, fluorosulfonic acid amide is generated. Since the fluorosulfonic acid amide even in a trace amount adversely affects battery performance or the like, existence of the fluorosulfonic acid amide is not preferred. The fluorosulfonic acid amide is generated by reaction with water contained in air or an organic solvent even in a solid (powder or the like) of the MFSI or a solution obtained by dissolving the MFSI in an organic solvent. Herein, according to intensive studies of the present inventors, the fluorosulfonic acid amide is promptly hydrolyzed in the aqueous solution and lost. For this reason, unlike the case of storing the MFSI as a solid (powder or the like) or a solution obtained by dissolving the MFSI in an organic solvent, the content of the fluorosulfonic acid amide can be suppressed to be low in the case of storing the MFSI in the aqueous solution.

As the MFSI contained in the MFSI aqueous solution, two or more kinds of alkali metals may be included and only one kind of alkali metal is preferably included. Note that, "including only one kind of alkali metal" means that the total amount of alkali metals other than this one kind of alkali metal in the MFSI aqueous solution is the impurity level, and specifically, the total amount of alkali metals other than this one kind of alkali metal is preferably 1 mol% or less, more preferably 0.5 mol% or less, and further preferably 0.1 mol% or less, with respect to the total amount of the alkali metal ions contained in the MFSI aqueous solution.

The total content of the MFSI and water in the MFSI aqueous solution is preferably 98.5 mass% or more and more preferably 99 mass% or more.

The pH of the MFSI aqueous solution is preferably less than 7, more preferably 6 or less, and further preferably 5 or less, from the viewpoint of further enhancing the storage stability of the MFSI aqueous solution. Furthermore, the pH of the MFSI aqueous solution is preferably -3 or more, more preferably 1 or more, further preferably 2 or more, and particularly preferably 4 or more, from the viewpoint of handling properties, for example, viewpoint that generation of impurities can be suppressed when the MFSI is extracted with an organic solvent. Note that, from the viewpoint of achieving both the storage stability and the handling properties of the MFSI aqueous solution, the pH of the MFSI aqueous solution is preferably -3 to 10, more preferably -3 or more and less than 7, further preferably -3 to 6, and particularly preferably 0 to 6. The pH of the MFSI aqueous solution can be measured by a pH meter, pH-test paper, or the like.

The content of the MFSI in the MFSI aqueous solution is not particularly limited and may be equal to or less than the saturated concentration of the MFSI, and the content thereof may be 1 to 90 mass% or 5 to 85 mass% with respect to the total amount of the MFSI aqueous solution. Note that, when the MFSI is diluted in the MFSI aqueous solution, the stability of the MFSI tends to be further improved, and a high-concentration MFSI is preferred in terms of a space required for storage. From such a viewpoint, the content of the MFSI in the MFSI aqueous solution is preferably 5 to 90 mass%, more preferably 7 to 85 mass%, further preferably 10 to 80 mass%, even further preferably 15 to 80 mass%, and particularly preferably 25 to 75 mass%, with respect to the total amount of the MFSI aqueous solution.

Note that, the content of the MFSI in the MFSI aqueous solution may be 30 mass% or more, 32 mass% or more, or 35 mass% or more with respect to the total amount of the MFSI aqueous solution (the upper limit may be the saturated concentration of the MFSI).

The MFSI aqueous solution of the present disclosure may contain fluoride ions (F⁻). The content of the fluoride ions in the MFSI aqueous solution is preferably 10000 ppm by mass or less, more preferably 1 to 1000 ppm by mass, further preferably 1 to 500 ppm by mass, particularly preferably 2 to 100 ppm by mass, and even further preferably 3 to 50 ppm by mass, with respect to the total amount of the MFSI aqueous solution. Note that, the fluoride ions may not be contained in the MFSI aqueous solution, and the content of the fluoride ions may be substantially 0 ppm by mass. The content of the fluoride ions in the MFSI aqueous solution may be 1000 ppm by mass or less with respect to the total amount of the MFSI aqueous solution.

By adding an acid containing fluoride ions to the MFSI aqueous solution of the present disclosure, the pH can be adjusted in a preferred range. As the acid used herein, for example, hydrofluoric acid, ammonium acid fluoride, and the like are exemplified. As a result of pH adjustment, the above-described fluoride ions may be contained.

The MFSI aqueous solution of the present disclosure may contain sulfate ions (SO₄²⁻). The content of the sulfate ions in the MFSI aqueous solution is preferably 10000 ppm by mass or less, more preferably 2 to 1000 ppm by mass, further preferably 3 to 500 ppm by mass, particularly preferably 5 to 100 ppm by mass, and even further preferably 10 to 50 ppm by mass, with respect to the total amount of the MFSI aqueous solution. Note that, the sulfate ions may not be contained in the MFSI aqueous solution, and the content thereof may be substantially 0 ppm by mass. Note that, the sulfate ions may not be contained in the MFSI aqueous solution, and the content of the sulfate ions may be substantially 0 ppm by mass.

By adding an acid containing sulfate ions to the MFSI aqueous solution of the present disclosure, the pH can be adjusted in a preferred range. As the acid used herein, sulfuric acid, ammonium sulfate, ammonium hydrogen sulfate, lithium hydrogen sulfate, sodium hydrogen sulfate, potassium hydrogen sulfate, and the like are exemplified. As a result of pH adjustment, the above-described sulfate ions may be contained. In the case of adding an acid containing sulfate ions to the MFSI aqueous solution, the content of the sulfate ions in the MFSI aqueous solution can also be set to 10000 ppm by mass or less, can also be set to 100 to 5000 ppm by mass, and can also be set to 500 to 3000 ppm by mass, with respect to the total amount of the MFSI aqueous solution.

The MFSI aqueous solution of the present disclosure may contain fluorosulfate ions (FSO₃⁻). The content of the fluorosulfate ions in the MFSI aqueous solution is preferably 10000 ppm by mass or less, more preferably 2 to 1000 ppm by mass, further preferably 3 to 500 ppm by mass, particularly preferably 5 to 100 ppm by mass, and even further preferably 10 to 50 ppm by mass, with respect to the total amount of the MFSI aqueous solution, from the viewpoint of the refining efficiency when the MFSI is separated from the MFSI aqueous solution by an organic solvent. Note that, the fluorosulfate ions may not be contained in the MFSI aqueous solution, and the content of the fluorosulfate ions may be substantially 0 ppm by mass.

The MFSI aqueous solution of the present disclosure may contain amidosulfate ions. By containing the amidosulfate ions, an excess base is neutralized, and the pH of the MFSI aqueous solution is less likely to exceed 10. Furthermore, the amidosulfate ions are gradually hydrolyzed in the MFSI aqueous solution during storage to generate ammonium hydrogen sulfate. Since the pH of the MFSI aqueous solution is less likely to change by buffering action of the generated ammonium hydrogen sulfate, the pH of the MFSI aqueous solution is easily maintained in a proper range. The content of the amidosulfate ions is preferably 1 to 10000 ppm by mass, more preferably 10 to 5000 ppm by mass, further preferably 100 to 4000 ppm by mass, and particularly preferably 500 to 3000 ppm by mass, with respect to the total amount of the MFSI aqueous solution. Furthermore, the content of the amidosulfate ions may be 1500 ppm by mass or less, 1 to 1000 ppm by mass, or 1 to 500 ppm by mass, from the viewpoint of reducing the refining load of the MFSI. The concentration of the amidosulfate ions may be adjusted by adding amidosulfonic acid or a salt thereof (for example, an alkali metal salt of amidosulfonic acid) to the MFSI aqueous solution.

The MFSI aqueous solution of the present disclosure may contain ammonia or an ammonium salt as impurities. The content of the ammonia or the ammonium salt in the MFSI aqueous solution is preferably 10000 ppm by mass or less, more preferably 1000 ppm by mass or less, and further preferably 1 to 500 ppm by mass, with respect to the total amount of the MFSI aqueous solution, from the viewpoint of separating properties when the MFSI is separated from the MFSI aqueous solution by an organic solvent. Note that, the ammonia or the ammonium salt may not be contained in the MFSI aqueous solution, and the content of the ammonia or the ammonium salt may be substantially 0 ppm by mass.

The MFSI aqueous solution of the present disclosure may contain impurities derived from a raw material. As such impurities, bis(fluorosulfonyl)imide (H(SO₂F)₂N, hereinafter, also referred to as HFSI) is exemplified. The content of the HFSI in the MFSI aqueous solution is preferably 7 parts by mole or less, more preferably 5 parts by mole or less, further preferably 3 parts by mole or less, particularly preferably 2 parts by mole or less, and even further preferably 1 part by mole or less, with respect to 100 parts by mole of the MFSI. Note that, the HFSI may not be contained in the MFSI aqueous solution, and the content of the HFSI may be substantially 0 parts by mole with respect to 100 parts by mole of the MFSI.

It is preferable that the MFSI aqueous solution of the present disclosure does not contain a transition metal compound. The content of the transition metal compound in the MFSI aqueous solution is preferably 100 ppm by mass or less, preferably 50 ppm by mass or less, further preferably 10 ppm by mass or less, and particularly preferably 5 ppm by mass or less, with respect to the total amount of the MFSI aqueous solution. Examples of the transition metal compound include bismuth compounds (bismuth halide such as bismuth fluoride (BF₃) or bismuth chloride (BiCl₃), bismuth oxide, and the like). The content of the bismuth compound in the MFSI aqueous solution is preferably 100 ppm by mass or less, preferably 50 ppm by mass or less, further preferably 10 ppm by mass or less, particularly preferably 5 ppm by mass or less, and even further preferably substantially 0 ppm by mass with respect to the total amount of the MFSI aqueous solution.

The method for preparing the MFSI aqueous solution of the present disclosure is not particularly limited, and for example, the following methods 1) to 3) are exemplified.
1) Dissolving a solid (powder) of MFSI in water
2) Extracting from an organic solvent solution of MFSI with water
3) Neutralization reaction between HFSI and an alkali metal compound in water

The solid (powder) of MFSI used in 1) may be those obtained by a conventionally known method. The MFSI aqueous solution obtained by such a method may be, for example, those obtained by the methods 2) and 3), or those obtained by removing a by-product from a product obtained by the following method 4) or 5).
4) Reaction between an onium salt of bis(fluorosulfonyl)imide and an alkali metal hydroxide in water
5) Ion-exchange reaction between a salt of bis(fluorosulfonyl)imide and an alkali metal halide in water In the method 4), examples of onium ions include ammonium ions, oxonium ions, phosphonium ions, and sulfonium ions, and examples of ammonium ions include NH₄⁺, tetramethylammonium, tetrabutylammonium, and tripropylammonium.

In the method 5), examples of the salt of bis(fluorosulfonyl)imide include an alkali metal salt, an alkaline-earth metal salt, an ammonium salt, and an alkylammonium salt.

In the method 2), examples of the organic solvent include an ether-based solvent, an ester-based solvent, a nitrile-based solvent, a halogen-based solvent, an aromatic solvent, and a carbonate-based solvent.

In the method 3), as the alkali metal compound, an alkali metal compound that reacts with HFSI to generate, as a by-product, water or a gas, which can be easily removed, such as carbon dioxide is preferred, and an alkali metal hydroxide, alkali metal carbonate, and the like are exemplified. In the method 3), HFSI and the alkali metal compound which are almost equimolar can be used and an insoluble unreacted product can be removed by filtration or the like, so that the unreacted product does not remain in the aqueous solution.

Note that, the method 2) may be applied to the MFSI solution obtained by extracting MFSI with an organic solvent from the MFSI aqueous solution produced by the method 3) or 4) to separate a by-product from the MFSI.

In the case of adjusting the pH of the MFSI aqueous solution, the pH can be adjusted by adding an acid or a base. The acid is not particularly limited, and examples thereof include hydrofluoric acid, hydrochloric acid, sulfuric acid, sodium hydrogen sulfate, potassium hydrogen sulfate, and lithium hydrogen sulfate. Examples of the base include alkali metal hydroxides (such as lithium hydroxide, sodium hydroxide, and potassium hydroxide) and alkali metal carbonates (lithium carbonate, sodium carbonate, potassium carbonate, or the like, lithium hydrogen carbonate, sodium hydrogen carbonate, and potassium hydrogen carbonate).

An aqueous solution-containing container of the present disclosure accommodates the above-described MFSI aqueous solution in a container. That is, the aqueous solution-containing container of the present disclosure includes a container and the MFSI aqueous solution of the present disclosure contained in this container. The expression "aqueous solution-containing" indicates a state where the aqueous solution is already contained in the container.

A material for the container is not particularly limited, and any materials such as a resin, glass, and a metal can also be used. Examples of the resin include polypropylene, polyethylene, vinyl chloride, PET, PTFE, and PFA. Examples of the glass include soda-lime glass, borosilicate glass, and quartz glass. Examples of the metal include iron, SUS, copper, a nickel alloy, a cobalt alloy, and a titanium alloy. Note that, the container may be a bottle, but may be a bag-shaped container or a bag made of a resin such as polypropylene. Note that, the container may be configured by one or more kinds of materials, and for example, a material obtained by staking a plurality of resins, a material obtained by stacking a metal foil on a resin or glass, and the like may be used.

In the MFSI aqueous solution, there is a tendency that the MFSI is gradually decomposed to become a strong acid and this strong acid corrodes a metal. Furthermore, since a trace amount of hydrofluoric acid is also generated, there is also a possibility that this hydrofluoric acid erodes glass. Therefore, in the case of long-term storage, storage in a container made of a resin is preferred. Note that, in a case where the container contains two or more kinds of materials, a surface, which is in contact with the MFSI aqueous solution, of the container is preferably formed by a resin.

The MFSI aqueous solution of the present disclosure is excellent in storage stability, and thus can be stored as it is in an aqueous solution state. The MFSI aqueous solution may be stored as the aforementioned aqueous solution-containing container.

The storage temperature is preferably -20°C to 60°C, more preferably -10°C to 45°C, and further preferably 0°C to 40°C. The MFSI aqueous solution may be solidified once and the solidified MFSI aqueous solution may be decomposed when being melted again. When the storage temperature is -20°C or higher, there is a tendency that the decomposition of the MFSI when being melted again can be suppressed. When the storage temperature is 60°C or lower, there is a tendency that the decomposition reaction of the MFSI can be suppressed.

The storage period of the MFSI aqueous solution may be at least one day, at least three days, or at least one week.

The MFSI aqueous solution is preferably stored in a state of being sealed in the container in order to avoid a decrease in moisture during storage.

Furthermore, the MFSI aqueous solution of the present disclosure is excellent in storage stability, and thus can be transported as it is in an aqueous solution state. The MFSI aqueous solution may be transported as the aforementioned aqueous solution-containing container.

As the transporting method, for example, transporting by a transport vehicle is exemplified, and a method for transporting the MFSI aqueous solution in a state of being put on a loading platform or the like of a transport vehicle is exemplified.

As the method of using the MFSI aqueous solution of the present disclosure, the MFSI aqueous solution may be used as the aqueous solution without any changes, but MFSI powder may be obtained by removing water by heating, pressure reducing, spray drying, or a combination method thereof, and an organic solvent solution of the MFSI may be obtained by extracting the MFSI with an organic solvent.

In the case of extraction with an organic solvent, this organic solvent is not particularly limited, and an ether-based solvent, a nitrile-based solvent, an ester-based solvent, a carbonate-based solvent, and the like can be used. Preferably, diethyl ether, diisopropylether, tetrahydrofuran, valeronitrile, isobutyronitrile, butyronitrile, ethyl acetate, propyl acetate, isopropyl acetate, butyl acetate, isobutyl acetate, dimethyl carbonate, diethyl carbonate, ethyl methyl carbonate, ethylene carbonate, or a mixed solvent which can be obtained by arbitrarily combining these solvents is exemplified. The amidosulfate ions, the fluorine ions, the sulfate ions, and ammonia or the ammonium salt can be separated and removed in the form of a salt or a molecule into a water layer by an extraction operation.

The MFSI extracted with the organic solvent can be isolated and refined by further performing condensation, crystallization, recrystallization, or the like.

The obtained MFSI powder or solution can be used in an additive to an electrolytic solution of a battery or a capacitor, a selective electrophilic fluorinating agent, a photo acid generator, a thermal acid generator, a near infrared light-absorbing dye, and the like.

### Examples

### (Production Example 1)

10.0 g of powder of lithium bis(fluorosulfonyl)imide was dissolved in 10.0 g of water to obtain an aqueous solution. The pH of the aqueous solution obtained by a pH meter was found to be 2.9. It was found by ion chromatography that 30 ppm by mass of fluoride ions, 20 ppm by mass of sulfate ions, and 25 ppm by mass of amidosulfate ions were contained in the aqueous solution.

### (Production Example 2)

0.10 g of lithium carbonate and 10.0 g of powder of lithium bis(fluorosulfonyl)imide were dissolved in 9.9 g of water to obtain an aqueous solution. The pH of the obtained aqueous solution by a pH meter was found to be 7.2. It was found by ion chromatography that the same amounts of the fluoride ions, the sulfate ions, and the amidosulfate ions as those in Production Example 1, except lithium carbonate, were contained in the obtained aqueous solution.

### (Production Example 3)

10.0 g of powder of lithium bis(fluorosulfonyl)imide was dissolved in a solution obtained by dissolving 0.059 g of sulfuric acid in water to adjust to 10.0 g to obtain an aqueous solution. The added amount of sulfuric acid corresponds to 2867 ppm by mass in terms of the initial concentration of the sulfate ions. The pH of the LiFSI aqueous solution obtained by a pH meter was found to be 0.1. It was found by ion chromatography that the same amounts of the fluoride ions and the amidosulfate ions as those in Production Example 1, except the added amount of sulfuric acid, were contained in the LiFSI aqueous solution.

### (Production Example 4)

1000 g of bis(fluorosulfonyl)imide was added dropwise to a slurry obtained by mixing 214 g of lithium carbonate and 966 g of water and cooling the mixture in an ice bath, over 45 minutes. An insoluble component was removed from the obtained cloudy liquid with Kiriyama filter paper No. 5C to obtain an aqueous solution containing 50.1 mass% of LiFSI (the total amount of water and LiFSI in the aqueous solution was 99.8 mass%). Note that, the concentration of LiFSI was measured by ¹⁹F NMR.

It was found by ¹⁹F NMR analysis that 91 ppm by mass of fluorosulfonate ions were contained in the obtained aqueous solution. Furthermore, it was found by ion chromatography that 6 ppm by mass of fluoride ions, 28 ppm by mass of sulfate ions, 1930 ppm by mass of amidosulfate ions, and 6 ppm by mass of ammonium ions were contained in the obtained aqueous solution. Furthermore, the pH of the obtained aqueous solution by pH-test paper was found to be 5.

### (Production Example 5)

0.10 g of lithium hydroxide monohydrate and 10.0 g of lithium bis(fluorosulfonyl)imide were dissolved in 9.9 g of water to obtain an aqueous solution. The pH of the obtained aqueous solution by pH-test paper was found to be 14.

### (Production Example 6)

Powder of lithium bis(fluorosulfonyl)imide was dissolved in water to obtain 20.0 g of an aqueous solution of which concentration of the lithium bis(fluorosulfonyl)imide is 10.0 mass%. The pH of the obtained aqueous solution by a pH meter was found to be 7.3. It was found by ion chromatography that 8 ppm by mass of fluoride ions and 3 ppm by mass of sulfate ions were contained in the obtained aqueous solution.

### (Production Example 7)

Powder of lithium bis(fluorosulfonyl)imide was dissolved in water to obtain 20.0 g of an aqueous solution of which concentration of the lithium bis(fluorosulfonyl)imide is 31.0 mass%. The pH of the obtained aqueous solution by a pH meter was found to be 7.2. It was found by ion chromatography that 20 ppm by mass of fluoride ions, 4 ppm by mass of sulfate ions, and 1 ppm by mass of amidosulfate ions were contained in the obtained aqueous solution.

### (Production Example 8)

Powder of lithium bis(fluorosulfonyl)imide was dissolved in water to obtain 20.0 g of an aqueous solution of which concentration of the lithium bis(fluorosulfonyl)imide is 40.0 mass%. The pH of the obtained aqueous solution by a pH meter was found to be 6.9. It was found by ion chromatography that 26 ppm by mass of fluoride ions, 5 ppm by mass of sulfate ions, and 2 ppm by mass of amidosulfate ions were contained in the obtained aqueous solution.

### (Production Example 9)

Powder of lithium bis(fluorosulfonyl)imide was dissolved in water to obtain 20.0 g of an aqueous solution of which concentration of the lithium bis(fluorosulfonyl)imide is 71.0 mass%. The pH of the obtained aqueous solution by a pH meter was found to be 5.6. By ion chromatography, 43 ppm by mass of fluoride ions, 6 ppm by mass of sulfate ions, and 18 ppm by mass of amidosulfate ions were contained in the aqueous solution.

### (Production Example 10)

Powder of lithium bis(fluorosulfonyl)imide was dissolved in water to obtain 20.0 g of an aqueous solution of which concentration of the lithium bis(fluorosulfonyl)imide is 81.0 mass%. The pH of the obtained aqueous solution by a pH meter was found to be 5.1. It was found by ion chromatography that 53 ppm by mass of fluoride ions, 19 ppm by mass of sulfate ions, and 25 ppm by mass of amidosulfate ions were contained in the aqueous solution.

### (Example 1)

The aqueous solution obtained in Production Example 1 was stored in a container made of polypropylene at 25°C for one week. It was found by ¹⁹F NMR analysis that 49.9 mass% of LiFSI and 29 ppm by mass of fluoride ions were contained in the aqueous solution after storage. Furthermore, it was found by ion chromatography that 22 ppm by mass of sulfate ions and 25 ppm by mass of amidosulfate ions were contained. The total amount of water and LiFSI in the aqueous solution after storage was 100.0 mass%.

### (Example 2)

As a result of the same analysis as in Example 1 after storing the aqueous solution obtained in Production Example 2 in a container made of polypropylene at 25°C for one week, it was found that 49.6 mass% of LiFSI, 40 ppm by mass of fluoride ions, 17 ppm by mass of sulfate ions, and 22 ppm by mass of amidosulfate ions were contained in the aqueous solution. The total amount of water and LiFSI in the aqueous solution after storage was 99.4 mass%.

### (Example 3)

As a result of the same analysis as in Example 1 after storing the aqueous solution obtained in Production Example 3 in a container made of polypropylene at 25°C for one week, it was found that 50.0 mass% of LiFSI, 39 ppm by mass of fluoride ions, 3301 ppm by mass of sulfate ions, 246 ppm by mass of amidosulfate ions, and 1 ppm by mass of ammonium ions were contained in the aqueous solution. The total amount of water and LiFSI in the aqueous solution after storage was 99.7 mass%.

### (Example 4)

As a result of the same analysis as in Example 1 after storing the aqueous solution obtained in Production Example 4 in a container made of polypropylene at 5°C for one week, it was found that 50.1 mass% of LiFSI, 64 ppm by mass of fluorosulfonate ions, 6 ppm by mass of fluoride ions, 21 ppm by mass of sulfate ions, 1820 ppm by mass of amidosulfate ions, and 7 ppm by mass of ammonium ions were contained in the aqueous solution.

### (Example 5)

As a result of the same analysis as in Example 1 after storing the aqueous solution obtained in Production Example 4 in a container made of polypropylene at 25°C for one week, it was found that 50.1 mass% of LiFSI, 73 ppm by mass of fluorosulfonate ions, 6 ppm by mass of fluoride ions, 27 ppm by mass of sulfate ions, 1839 ppm by mass of amidosulfate ions, and 6 ppm by mass of ammonium ions were contained in the aqueous solution.

### (Example 6)

As a result of the same analysis as in Example 1 after storing the aqueous solution obtained in Production Example 4 in a container made of polypropylene at 40°C for one week, it was found that 50.1 mass% of LiFSI, 33 ppm by mass of fluorosulfonate ions, 13 ppm by mass of fluoride ions, 175 ppm by mass of sulfate ions, 1950 ppm by mass of amidosulfate ions, and 8 ppm by mass of ammonium ions were contained in the aqueous solution. The total amount of water and LiFSI in the aqueous solution after storage was 99.8 mass%.

### (Example 7)

As a result of the same analysis as in Example 1 after storing the aqueous solution obtained in Production Example 6 in a container made of polypropylene at 40°C for three months, 10.2 mass% of LiFSI, 8 ppm by mass of fluoride ions, 12 ppm by mass of sulfate ions, and 3 ppm by mass of amidosulfate ions were contained in the aqueous solution. The total amount of water and LiFSI in the aqueous solution after storage was 100.0 mass%.

### (Example 8)

As a result of the same analysis as in Example 1 after storing the aqueous solution obtained in Production Example 7 in a container made of polypropylene at 40°C for three months, 30.8 mass% of LiFSI, 17 ppm by mass of fluoride ions, and 3 ppm by mass of sulfate ions were contained in the aqueous solution. The total amount of water and LiFSI in the aqueous solution after storage was 100.0 mass%.

### (Example 9)

As a result of the same analysis as in Example 1 after storing the aqueous solution obtained in Production Example 8 in a container made of polypropylene at 40°C for one month, 40.8 mass% of LiFSI, 25 ppm by mass of fluoride ions, and 5 ppm by mass of sulfate ions were contained in the aqueous solution. The total amount of water and LiFSI in the aqueous solution after storage was 100.0 mass%.

### (Example 10)

As a result of the same analysis as in Example 1 after storing the aqueous solution obtained in Production Example 9 in a container made of polypropylene at 25°C for two weeks, 71.1 mass% of LiFSI, 53 ppm by mass of fluoride ions, 52 ppm by mass of sulfate ions, and 187 ppm by mass of amidosulfate ions were contained in the aqueous solution. The total amount of water and LiFSI in the aqueous solution after storage was 100.0 mass%.

### (Example 11)

As a result of the same analysis as in Example 1 after storing the aqueous solution obtained in Production Example 10 in a container made of polypropylene at 25°C for two weeks, 80.8 mass% of LiFSI, 130 ppm by mass of fluoride ions, 102 ppm by mass of sulfate ions, and 375 ppm by mass of amidosulfate ions were contained in the aqueous solution. The total amount of water and LiFSI in the aqueous solution after storage was 99.9 mass%.

### (Comparative Example)

As a result of the same analysis as in Example 1 after storing the aqueous solution obtained in Production Example 5 in a container made of polypropylene at 25°C for one week, it was found that 48.5 mass% of LiFSI, 2488 ppm by mass of fluoride ions, 3987 ppm by mass of sulfate ions, 8135 ppm by mass of amidosulfate ions, and 5 ppm by mass of ammonium ions were contained in the aqueous solution. The total amount of water and LiFSI in the aqueous solution after storage was 97.6 mass%.

The storage conditions, the concentrations of each component before and after storage, and the like in Examples 1 to 11 and Comparative Example are shown in Table 1.

**[Table 1]**

| | At time of prod uction | | | After storage | | |
|---|---|---|---|---|---|---|
| | pH | Total amount of LiFSI and water (mass%) | LiFSI concentration (mass%) | Storage condition | Total amount of LiFSI and water (mass%) | LiFSI concentration (mass%) |
| Example 1 | 2.9 | 100.0 | 50.0 | 25°C for one week | 99.9 | 49.9 |
| Example 2 | 7.2 | 99.5 | 49.7 | 25°C for one week | 99.4 | 49.6 |
| Example 3 | 0.1 | 99.7 | 50.0 | 25°C for one week | 99.7 | 50.0 |
| Example 4 | 5 | 99.8 | 50.1 | 5°C for one week | 99.8 | 50.1 |
| Example 5 | 5 | 99.8 | 50.1 | 25°C for one week | 99.8 | 50.1 |
| Example 6 | 5 | 99.8 | 50.1 | 40°C for one week | 99.8 | 50.1 |
| Example 7 | 7.3 | 100.0 | 10.0 | 40°C for three months | 100.0 | 10.2 |
| Example 8 | 7.2 | 100.0 | 31.0 | 40°C for three months | 100.0 | 30.8 |
| Example 9 | 6.9 | 100.0 | 40.0 | 40°C for one month | 100.0 | 40.8 |
| Example 10 | 5.6 | 100.0 | 71.0 | 25°C for two weeks | 100.0 | 71.1 |
| Example 11 | 5.1 | 100.0 | 81.0 | 25°C for two weeks | 99.9 | 80.8 |
| Comparative Example | 14 | 99.5 | 50.1 | 25°C for one week | 97.6 | 48.5 |

As shown in Table 1, it was found that, since the LiFSI concentrations of the aqueous solution before and after storage are maintained constant in Examples 1 to 11, the decomposition of LiFSI is suppressed and the storage stability is favorable. On the other hand, it was found that, since the LiFSI concentration is decreased before and after storage and the total content of the alkali metal bis(fluorosulfonyl)imide and water after storage is less than 98 mass% in Comparative Example, the decomposition reaction of the LiFSI proceeds during storage to deteriorate storage stability.

## Claims

1. An aqueous solution comprising an alkali metal bis(fluorosulfonyl)imide, wherein
a total content of the alkali metal bis(fluorosulfonyl)imide and water is 98 mass% or more with respect to a total amount of the aqueous solution, and
a pH is -3 to 10.

2. The aqueous solution according to claim 1, wherein the aqueous solution contains 10000 ppm by mass or less of fluoride ions with respect to the total amount of the aqueous solution.

3. The aqueous solution according to claim 1 or 2, wherein the aqueous solution contains 10000 ppm by mass or less of sulfate ions with respect to the total amount of the aqueous solution.

4. The aqueous solution according to any one of claims 1 to 3, wherein the aqueous solution contains 1 to 10000 ppm by mass of amidosulfate ions with respect to the total amount of the aqueous solution.

5. The aqueous solution according to any one of claims 1 to 4, wherein the aqueous solution contains 1 to 90 mass% of the alkali metal bis(fluorosulfonyl)imide with respect to the total amount of the aqueous solution.

6. An aqueous solution-containing container comprising:
a container; and
an aqueous solution contanined in the container, wherein
the aqueous solution is the aqueous solution according to any one of claims 1 to 5.

7. The aqueous solution-containing container according to claim 6, wherein the container contains at least one material selected from the group consisting of a resin, glass, and a metal.

8. A method for storing or transporting an aqueous solution containing an alkali metal bis(fluorosulfonyl)imide, the method comprising:
storing or transporting the aqueous solution according to any one of claims 1 to 5.
